(19)

Europäisches
Patentamt
European
Patent Office
Office européen
des brevets

(11) **EP 4 625 079 A1**

(12) **EUROPÄISCHE PATENTANMELDUNG**

(43) Veröffentlichungstag:
**01.10.2025 Patentblatt 2025/40**

(21) Anmeldenummer: **24166821.9**

(22) Anmeldetag: **27.03.2024**

(51) Internationale Patentklassifikation (IPC):
**G05B 19/418** (2006.01) **H04J 3/16** (2006.01)
**H04L 12/40** (2006.01) **H04L 12/403** (2006.01)

(52) Gemeinsame Patentklassifikation (CPC):
**H04J 3/1629; G05B 19/4185**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder: **Weichlein, Thomas
91052 Erlangen (DE)**

(74) Vertreter: **Siemens Patent Attorneys
Postfach 22 16 34
80506 München (DE)**

(54) **VERFAHREN UND VORRICHTUNG ZUR ÜBERMITTLUNG ZEITKRITISCHER DATEN INNERHALB EINES KOMMUNIKATIONSNETZES**

(57) Die Erfindung betrifft ein Verfahren zur Übermittlung zeitkritischer Daten innerhalb eines Kommunikationsnetzes, bei dem Daten entsprechend einem Zeitmultiplexverfahren innerhalb eines vorgegebenen Zyklus (T) über das Kommunikationsnetz (200) übermittelt werden. Die zeitkritischen Daten (400) werden von und/oder zu Steuerungsanwendungen übermittelt, die jeweils mittels zumindest einer Ablaufsteuerungskomponente (131-136) bereitgestellt werden, die in zumindest eine auf einem Host (100) installierte Ablaufsteuerungsumgebung (121-123) ladbar und dort ausführbar ist. Zumindest für zeitkritische Daten (400), die ausgewählten Steuerungsanwendungen zugeordnet sind, wird jeweils ein anwendungsindividuelles Zeitfenster (411-417) spezifiziert, dem ein anwendungsindividueller Zyklus zugeordnet ist, der ein $2^n$-Vielfaches des vorgegebenen Zyklus (T) ist. In Abhängigkeit vom jeweiligen anwendungsindividuellen Zyklus werden jeweils Offsets der anwendungsindividuellen Zeitfenster (411-417) derart festgelegt, dass eine Folge aneinander angrenzender anwendungsindividueller Zeitfenster (420) gebildet wird. Zeitkritische Daten (400), die den ausgewählten Steuerungsanwendungen zugeordnet sind, werden jeweils entsprechend den anwendungsindividuellen Zyklen und den Offsets der anwendungsindividuellen Zeitfenster durch den Host (100) über das Kommunikationsnetz (200) gesendet.

FIG 1

EP 4 625 079 A1

**Beschreibung**

Die vorliegende Erfindung betrifft ein Verfahren zur Übermittlung zeitkritischer Daten innerhalb eines Kommunikationsnetzes, insbesondere eines Kommunikationsnetzes eines industriellen Automatisierungssystems, und eine Vorrichtung, insbesondere einen Host oder ein Cloud bzw. Edge Computing-Gerät, zur Durchführung des Verfahrens.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qav sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

Entsprechend EP 3 038 325 B1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

Aus EP 3 674 824 B1 ist bekannt, für Datenströme, die auf Endgeräten ablaufenden ausgewählten Steuerungsanwendungen zugeordnet sind, jeweils ein individuelles Zeitfenster innerhalb vorgegebener Zeitintervalle zu spezifizieren. Die Zeitfenster weisen jeweils eine individuelle Zyklusdauer auf, die ein Vielfaches einer allgemeinen Zyklusdauer ist oder der allgemeinen Zyklusdauer entspricht. Erste bzw. zweite Kommunikationsgeräte überprüfen für die ausgewählten Steuerungsanwendungen jeweils, ob ein spezifiziertes Zeitfenster zur Datenübermittlung verfügbar ist. Bei einem verfügbaren Zeitfenster wird jeweils eine Information über einen Beginn des Zeitfensters innerhalb der vorgegebenen Zeitintervalle an das Endgerät übermittelt, auf dem die jeweilige ausgewählte Steuerungsanwendung abläuft. Datenströme, die ausgewählten Steuerungsanwendungen zugeordnet sind, werden jeweils entsprechend der Information über den Beginn des individuellen Zeitfensters übermittelt.

US11917027B2 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

In Cloud bzw. Edge Computing- oder Hyper Converged Infrastructure-Umgebungen können sich virtualisierte Anwendungen oder Dienste auf einem Host einen oder mehrere physische Netzwerkadapter teilen. Erfolgt eine Einspeisung von Daten, die von diesen Anwendungen oder Diensten ausgehen, in ein Kommunikationsnetz nicht koordiniert bzw. aufeinander abgestimmt, kann es in Egress-Frame-Buffern von Netzwerkadaptern zu einem Aufstauen von Frames mit zeitkritischen Daten kommen, die deterministisch zu übermitteln sind. Wenn Sendezeitpunkte der zeitkritischen Daten statistisch verteilt sind, wird auch eine Anzahl aufgestauter Frames dementsprechend statistisch verteilt sein, so dass zeitlich lokale Maxima hinsichtlich der Anzahl aufgestauter Frames auftreten. Diese lokalen Maxima führen entweder zu erhöhten Latenzen oder erfordern großzügig dimensionierte Egress-Frame-Buffer. Beide Nachteile erschweren eine Bereitstellung zeitkritischer Anwendungen oder Dienste mittels Cloud bzw. Edge Computing- oder Hyper Converged Infrastructure-Lösungen.

Der vorliegenden Erfindung liegt die Aufgabe zugrunde, ein Verfahren zur Übermittlung zeitkritischer Daten von bzw. zu virtualisierten Steuerungsanwendungen zu schaffen, das einerseits geringe Latenzen ermöglicht und anderseits einen geringen Bedarf ein System-Ressourcen, insbesondere Hardware-Ressourcen, aufweist, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch eine Vorrichtung mit den in Anspruch 14 angegebenen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationsnetzes werden Daten entsprechend einem Zeitmultiplexverfahren innerhalb eines vorgegebenen Zyklus über das Kommunikationsnetz übermittelt. Die zeitkritischen Daten werden von bzw. zu Steuerungsanwendungen übermittelt, die jeweils mittels zumindest einer Ablaufsteuerungskomponente bereitgestellt werden, die in zumindest eine auf einem Host installierte Ablaufsteuerungsumgebung ladbar und dort ausführbar ist. Der vorgegebene Zyklus wird vorteilhafterweise an sämtlichen Kommunikationsgeräten, insbesondere Hosts und Netzinfrastrukturgeräten, synchronisiert.

Die Ablaufsteuerungskomponenten können beispielsweise innerhalb der zumindest einen auf dem Host installierten Ablaufsteuerungsumgebung isoliert voneinander ablaufen und gemeinsam einen Betriebssystemkern des Host bzw. einen Netzwerkadapter des Host nutzen. Insbesondere können die Ablaufsteuerungskomponenten Virtuelle Maschinen, Container, WebAssembly- oder Java Bytecode sein, wobei die Ablaufsteuerungsumgebung ein Hypervisor, eine Container-Laufzeitumgebung, eine Web-Assembly-Laufzeitumgebung oder eine Java Virtual Machine sein kann. Grundsätzlich können auf dem Host mehrere Ablaufsteuerungsumgebungen installiert sein, die gemeinsam einen Netzwerkadapter des Host nutzen.

Zumindest für zeitkritische Daten, die ausgewählten Steuerungsanwendungen zugeordnet sind, wird erfindungsgemäß jeweils ein anwendungsindividuelles Zeitfenster spezifiziert, dem ein anwendungsindividueller Zyklus zugeordnet ist, der ein $2^n$-Vielfaches des vorgegebenen Zyklus ist. Darüber hinaus werden jeweils Offsets der anwendungsindividuellen Zeitfenster in Abhängigkeit vom jeweiligen anwendungsindividuellen Zyklus derart festgelegt, dass eine Folge aneinander angrenzender anwendungsindividueller Zeitfenster gebildet wird. Zeitkritische Daten, die den ausgewählten Steuerungsanwendungen zugeordnet sind, werden jeweils entsprechend den anwendungsindividuellen Zyklen und den Offsets der anwendungsindividuellen Zeitfenster durch den Host über das Kommunikationsnetz gesendet. Auf diese Weise können zu sendende zeitkritische Daten koordiniert am jeweiligen Host bzw. dessen Netzwerkadapter gepuffert und in das Kommunikationsnetz eingespeist werden. Außerdem können recht konstante Latenzzeiten realisiert werden, was eine Auslegung von durch die Steuerungsanwendungen implementierten Reglern vereinfacht.

Das jeweilige $2^n$-Vielfache des vorgegebenen Zyklus ist insbesondere eine Untersetzung des vorgegebenen Zyklus. Vorzugsweise wird der jeweilige Offset als Produkt berechnet, dessen erster Faktor der vorgegebene Zyklus ist und dessen zweiter Faktor eine Differenz zwischen einer Hälfte der Untersetzung und eins ist. Dabei wiederholt sich die Folge der aneinander angrenzenden anwendungsindividuellen Zeitfenster vorteilhafterweise in einem Gesamtzyklus, der sich aus einem Produkt des vorgegebenen Zyklus und einer maximalen Untersetzung unter sämtlichen anwendungsindividuellen Zyklen ergibt. Entsprechend einer bevorzugten Ausgestaltung ist der jeweilige Offset ein Zeitversatz eines Beginns des jeweiligen anwendungsindividuellen Zeitfensters innerhalb des Gesamtzyklus. Auf diese Weise können Steuerungsanwendungen unkompliziert den Beginn ihres anwendungsindividuellen Zeitfensters eigenständig ermitteln. Ein aufwendiges Verteilmanagement für die anwendungsindividuellen Zeitfenster ist also nicht erforderlich.

Entsprechend einer vorteilhaften Ausgestaltung der vorliegenden Erfindung überprüft der Host, ob für die ausgewählten Steuerungsanwendungen jeweils ein spezifiziertes anwendungsindividuelles Zeitfenster zur Datenübermittlung verfügbar ist. Bei bestehender Verfügbarkeit zur Datenübermittlung kann jeweilige Offset der anwendungsindividuellen Zeitfenster schnell und zuverlässig festgelegt werden.

Für eine Weiterleitung der zeitkritischen Daten, die ausgewählten Steuerungsanwendungen zugeordnet sind, durch das Kommunikationsnetz werden entsprechend einer weiteren vorteilhaften Ausgestaltung der vorliegenden Erfindungen Dienstgüteanforderungen kennzeichnende Dienstgüteparameter spezifiziert. In Netzinfrastrukturgeräten des Kommunikationsnetzes werden jeweils bei ausreichender Verfügbarkeit Ressourcen zur Übermittlung der zeitkritischen Daten entsprechend den spezifizierten Dienstgüteparametern reserviert. Dabei kann die Verfügbarkeit durch eine übergeordnete Kommunikationssteuerungseinheit des Kommunikationsnetzes bzw. die Netzinfrastrukturgeräte überprüft wird. Somit wird nicht nur eine koordinierte Einspeisung zeitkritischer Daten in das Kommunikationsnetz realisiert, sondern auch eine Weiterleitung durch das Kommunikationsnetz mit geringer Latenz. Die Netzinfrastrukturgeräte können insbesondere Switches oder Bridges sein, wobei die Ressourcen zur Übermittlung der zeitkritischen Daten beispielsweise nutzbare Übertragungszeitfenster, Bandbreite, zugesicherte maximale Latenz, Queue-Anzahl, Queue-Cache bzw. Adress-Cache in Switches oder Bridges umfassen.

Entsprechend einer weiteren vorteilhaften Ausgestaltung der vorliegenden Erfindung wird eine Weiterleitung der zeitkritischen Daten über die Netzinfrastrukturgeräte mittels Frame Preemption, insbesondere gemäß IEEE 802.1Q, mittels "Time-Aware Shaper" (TAS), insbesondere gemäß IEEE 802.1Q, mittels Credit-Based Shaper (CBS), insbesondere gemäß IEEE 802.1Q, mittels Burst Limiting Shaper (BLS), mittels Peristaltic Shaper, mittels Priority-Based Shaper, mittels Asynchronous Traffic Shaper (ATS) bzw. mittels Cyclic Queuing and Forwarding (CQF) gesteuert. Dabei können die zeitkritischen Daten Datenströmen zugeordnet sein und über Pfade, entlang derer in Netzinfrastrukturgeräten Ressourcen zur Übermittlung der Datenströme reserviert sind, übermittelt werden. Dies unterstützt eine deterministische Weiterleitung der zeitkritischen Daten durch das Kommunikationsnetz.

Die erfindungsgemäße Vorrichtung ist zur Durchführung eines Verfahrens entsprechend vorangehenden Ausführungen vorgesehen und umfasst einen Netzwerkadapter zur Übermittlung von Daten über ein Kommunikationsnetz entsprechend einem Zeitmultiplexverfahren innerhalb eines vorgegebenen Zyklus sowie eine Ablaufsteuerungsumgebung für Ablaufsteuerungskomponenten zur Bereitstellung von Steuerungsanwendungen. Dabei ist zumindest eine Ablaufsteuerungskomponente in die Ablaufsteuerungsumgebung ladbar und dort ausführbar. Außerdem ist die Vorrichtung zur Übermittlung zeitkritischer Daten von bzw. zu mittels Ablaufsteuerungskomponenten bereitgestellter Steuerungsanwendungen eingerichtet.

Darüber hinaus ist die erfindungsgemäße Vorrichtung dazu eingerichtet, dass zumindest für zeitkritische Daten, die ausgewählten Steuerungsanwendungen zugeordnet sind, jeweils ein anwendungsindividuelles Zeitfenster spezifiziert wird, dem ein anwendungsindividueller Zyklus zugeordnet ist, der ein $2^n$-Vielfaches des vorgegebenen Zyklus ist. Zusätzlich ist die Vorrichtung dazu eingerichtet, jeweils Offsets der anwendungsindividuellen Zeitfenster in Abhängigkeit vom jeweiligen anwendungsindividuellen Zyklus derart festzulegen, dass eine Folge aneinander angrenzender anwendungsindividueller Zeitfenster gebildet wird. Ferner ist die Vorrichtung dazu eingerichtet, zeitkritische Daten, die den ausgewählten Steuerungsanwendungen zugeordnet sind, jeweils entsprechend den anwendungsindividuellen Zyklen und den Offsets der anwendungsindividuellen Zeitfenster über das Kommunikationsnetz zu senden.

Die vorliegende Erfindung wird nachfolgend an einem Ausführungsbeispiel anhand der Zeichnung näher erläutert. Es zeigt

Figur 1    einen Host zur Bereitstellung von Steuerungsanwendungen mit zeitkritischen Daten über ein Kommunikationsnetz,

Figur 2    eine schematische Darstellung einer Verteilung und Ordnung von anwendungsindividuellen Zeitfenstern für Steuerungsanwendungen zur Übermittlung zeitkritischer Daten.

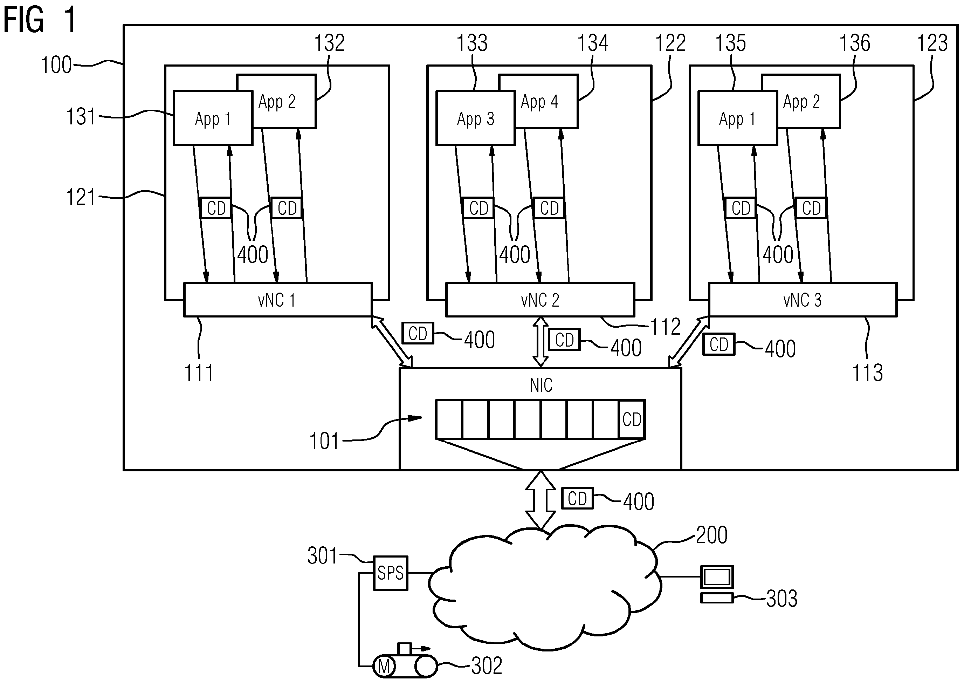

Der in Figur 1 dargestellte Host 100 umfasst eine Netzwerkkarte bzw. einen physischen Netzwerkadapter 101 zur Übermittlung von Daten über das Kommunikationsnetz 200 entsprechend einem Zeitmultiplexverfahren, und zwar innerhalb eines vorgegebenen Grundzyklus, der innerhalb des Kommunikationsnetzes 200 vorzugsweise an sämtlichen Kommunikationsgeräten, wie Hosts und Netzinfrastrukturgeräten, synchronisiert wird. Für die vorliegende Erfindung ist es grundsätzlich nicht erforderlich, dass der vorgegebene Grundzyklus zwischen dem Kommunikationsnetz und dem Host 100 bzw. durch den Host 100 bereitgestellten Steuerungsanwendungen synchronisiert wird.

Der Netzwerkadapter 101 umfasst insbesondere einen Egress-Frame-Buffer zur Pufferung in das Kommunikationsnetz 200 zu sendender Frames. Außerdem sind auf dem Host 100 im vorliegenden Ausführungsbeispiel mehrere Ablaufsteuerungsumgebungen 121-123 für Ablaufsteuerungskomponenten 131-136 installiert. Die Ablaufsteuerungskomponenten 131-136 sind in die jeweilige Ablaufsteuerungsumgebung 121-123 ladbar und dort ausführbar. Mittels der Ablaufsteuerungskomponenten131-136 werden Steuerungsanwendungen bereitgestellt, von bzw. zu denen zeitkritische Daten 400 übermittelt werden, beispielsweise Steuerungsdaten eines industriellen Automatisierungssystems oder allgemein Daten, die deterministisch zu übermitteln sind. Zur Übermittlung von Daten sind die Ablaufsteuerungsumgebungen 121-123 jeweils über einen zugeordneten virtuellen Netzwerkadapter 111-113 mit dem physischen Netzwerkadapter 101 des Host 100 verbunden. Grundsätzlich könnte der Host 100 auch mehrere physische Netzwerkadapter umfassen. Darüber hinaus sind auf dem Host 100 nicht notwendigerweise mehrere Ablaufsteuerungsumgebungen 121-123 installiert. Eine Ablaufsteuerungsumgebung ist ausreichend. Nachfolgende Ausführungen gelten für derartige Systemkonfigurationen dementsprechend.

Vorteilhafterweise laufen die Ablaufsteuerungskomponenten 131-136 innerhalb der jeweiligen Ablaufsteuerungsumgebung 121-123 isoliert voneinander ab und nutzen gemeinsam einen Betriebssystemkern des Host 100 oder einen Netzwerkadapter 101 des Host 100. Die Ablaufsteuerungskomponenten 131-136 können beispielsweise Virtuelle Maschinen, Container, WebAssembly- oder Java Bytecode sein. Dementsprechend kann eine Ablaufsteuerungsumgebung 121-123 ein Hypervisor, eine Container-Laufzeitumgebung, eine Web-Assembly-Laufzeitumgebung oder eine Java Virtual Machine sein. Insbesondere kann mittels einer Ablaufsteuerungsumgebung und einer Ablaufsteuerungskomponente eine virtuelle speicherprogrammierbare Steuerung (SPS/PLC - programmable logic controller) realisiert werden, die über das Kommunikationsnetz 200 mit anderen Kommunikations- bzw. Automatisierungsgeräten 301-303 zeitkritische Daten 400 austauscht. Derartige Kommunikations- bzw. Automatisierungsgeräte 301-303 können beispielsweise eine weitere speicherprogrammierbare Steuerungen 301, eine gesteuerte Maschine oder Vorrichtung 302, eine Bedien- und Beobachtungsstation 303 oder Eingabe/Ausgabe-Einheiten (I/O-Module) eines industriellen Automatisierungssystems sein.

Eine speicherprogrammierbare Steuerung 301 umfasst typischerweise ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 301 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 301 und einer durch die speicherprogrammierbare Steuerung 301 gesteuerten Maschine oder Vorrichtung 302. Die Zentraleinheit ist insbesondere für eine Ermittlung geeigneter Steuerungsgrößen aus erfassten Messgrößen vorgesehen. Obige Komponenten der speicherprogrammierbaren Steuerung 301 sind im vorliegenden Ausführungsbeispiel über ein Rückwandbus-System miteinander verbunden.

Eine Bedien- und Beobachtungsstation 303 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 303 zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Im vorliegenden Ausführungsbeispiel ist das Kommunikationsnetz 200 vorteilhafterweise als Time-sensitive Network ausgestaltet, insbesondere entsprechend IEEE 802.1Q, IEEE 802.1AB, IEEE 802.1AS, IEEE 802.1BA bzw. IEEE 802.1CB. Für eine Weiterleitung der zeitkritischen Daten 400, die den durch die Ablaufsteuerungskomponenten 131-136 bereitgestellten Steuerungsanwendungen zugeordnet sind, durch das Kommunikationsnetz 200 werden vorzugsweise Dienstgüteanforderungen kennzeichnende Dienstgüteparameter spezifiziert. In Netzinfrastrukturgeräten des Kommunikationsnetzes 200 werden jeweils bei ausreichender Verfügbarkeit Ressourcen zur Übermittlung der zeitkritischen Daten 400 entsprechend den spezifizierten Dienstgüteparametern reserviert. Dabei kann die Verfügbarkeit zentral durch eine übergeordnete Kommunikationssteuerungseinheit des Kommunikationsnetzes bzw. dezentral durch die Netzinfrastrukturgeräte überprüft werden.

Die Netzinfrastrukturgeräte des Kommunikationsnetzes 200 können beispielsweise Switches oder Bridges sein. In diesem Fall umfassen die Ressourcen zur Übermittlung der zeitkritischen Daten 400 insbesondere nutzbare Übertragungszeitfenster, Bandbreite, zugesicherte maximale Latenz, Queue-Anzahl, Queue-Cache bzw. Adress-Cache in Switches oder Bridges. Vorteilhafterweise kann eine Weiterleitung der zeitkritischen Daten über die Netzinfrastrukturgeräte mittels Frame Preemption, insbesondere gemäß IEEE 802.1Q, mittels "Time-Aware Shaper", insbesondere gemäß IEEE 802.1Q, mittels Credit-Based Shaper, insbesondere gemäß IEEE 802.1Q, mittels Burst Limiting Shaper, mittels Peristaltic Shaper, mittels Priority-Based Shaper, mittels Asynchronous Traffic Shaper bzw. mittels Cyclic Queuing and Forwarding (CQF) gesteuert werden. Vorzugsweise sind die zeitkritischen Daten 400 Datenströmen zugeordnet und werden über Pfade übermittelt, entlang derer in Netzinfrastrukturgeräten Ressourcen zur Übermittlung der Datenströme reserviert sind.

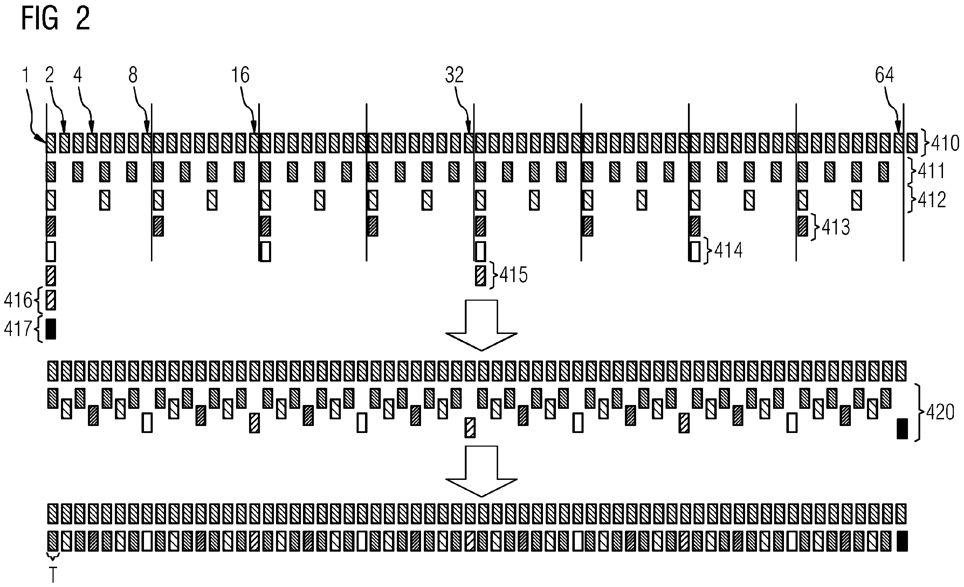

Entsprechend Figur 2 wird für die zeitkritischen Daten 400, die den durch die Ablaufsteuerungskomponenten 131-136 bereitgestellten Steuerungsanwendungen zugeordnet sind, jeweils ein anwendungsindividuelles Zeitfenster 411-417 spezifiziert, die eine Untermenge einer Folge insgesamt zur Datenübermittlung verfügbarer Zeitfenster 410 bilden. Den anwendungsindividuellen Zeitfenstern 411-417 ist jeweils ein anwendungsindividueller Zyklus zugeordnet, der ein $2^n$-Vielfaches des vorgegebenen Grundzyklus T ist. Der Grundzyklus beträgt im vorliegenden Ausführungsbeispiel 1 ms. In Figur 2 sind beispielhaft

- erste anwendungsindividuelle Zeitfenster 411 mit einem anwendungsindividuellen Zyklus von 2 ms,
- zweite anwendungsindividuelle Zeitfenster 412 mit einem anwendungsindividuellen Zyklus von 4 ms,

- dritte anwendungsindividuelle Zeitfenster 413 mit einem anwendungsindividuellen Zyklus von 8 ms,
- vierte anwendungsindividuelle Zeitfenster 414 mit einem anwendungsindividuellen Zyklus von 16 ms,
- fünfte anwendungsindividuelle Zeitfenster 415 mit einem anwendungsindividuellen Zyklus von 32 ms,
- sechste anwendungsindividuelle Zeitfenster 416 mit einem anwendungsindividuellen Zyklus von 64 ms und
- siebte anwendungsindividuelle Zeitfenster 417 mit einem anwendungsindividuellen Zyklus von 128 ms.

dargestellt.

Der Host 100 ist dafür eingerichtet, insbesondere ausgestaltet und konfiguriert, jeweils Offsets der anwendungsindividuellen Zeitfenster 411-417 in Abhängigkeit vom jeweiligen anwendungsindividuellen Zyklus derart festzulegen, dass eine Folge aneinander angrenzender anwendungsindividueller Zeitfenster 420 gebildet wird. Dementsprechend werden die zeitkritischen Daten 400, die den durch die Ablaufsteuerungskomponenten 131-136 bereitgestellten Steuerungsanwendungen zugeordnet sind, jeweils entsprechend den anwendungsindividuellen Zyklen und den Offsets der anwendungsindividuellen Zeitfenster durch den Host 100 in den Egress-Frame-Buffer des Netzwerkadapters 101 gequeued und über das Kommunikationsnetz 200 gesendet.

Das jeweilige $2^n$-Vielfache des vorgegebenen Grundzyklus T ist insbesondere eine Untersetzung U des vorgegebenen Grundzyklus T. Der jeweilige Offset $T_{off}$ kann damit als Produkt berechnet werden, dessen erster Faktor der vorgegebene Grundzyklus T ist und dessen zweiter Faktor eine Differenz zwischen einer Hälfte der Untersetzung und eins ist:

$$T_{off} = \left(\frac{U}{2} - 1\right) T.$$

Die Folge der aneinander angrenzenden anwendungsindividuellen Zeitfenster 420 wiederholt sich in einem Gesamtzyklus $T_{app}$, der sich aus einem Produkt des vorgegebenen Grundzyklus T und einer maximalen Untersetzung $U_{max}$ unter sämtlichen anwendungsindividuellen Zyklen ist:

$$T_{app} = U_{max} T = 2^m T, \; m \in \{0, 1, 2, \ldots, 16\}.$$

Dabei ist der jeweilige Offset $T_{off}$ ein Zeitversatz eines Beginns des jeweiligen anwendungsindividuellen Zeitfensters 411-417 innerhalb des Gesamtzyklus $T_{app}$.

Mit obigem Ansatz zur Berechnung des jeweiligen Offset $T_{off}$ für die anwendungsspezifischen Zeitfenster 411-417 wird ein Beginn der anwendungsspezifischen Zeitfenster 411-417 je nach deren anwendungsindividuellen Zyklus im vorliegenden Ausführungsbeispiel auf folgende Zeitschlitze gelegt:

- für erste anwendungsindividuelle Zeitfenster 411 auf Zeitschlitz 1,
- für zweite anwendungsindividuelle Zeitfenster 412 auf Zeitschlitz 2,
- für dritte anwendungsindividuelle Zeitfenster 413 auf Zeitschlitz 4,
- für vierte anwendungsindividuelle Zeitfenster 414 auf Zeitschlitz 8,
- für fünfte anwendungsindividuelle Zeitfenster 415 auf Zeitschlitz 16,
- für sechste anwendungsindividuelle Zeitfenster 416 auf Zeitschlitz 32 und
- für siebte anwendungsindividuelle Zeitfenster 417 auf Zeitschlitz 64.

Auf diese Weise kann der Beginn von anwendungsindividuellen Zeitfenstern 411-417 mit längerem anwendungsindividuellen Zyklus so verlegt werden, dass eine verteilte, homogenere Netzbelastung erzielt wird. Zur Realisierung einer derartigen optimierten Verteilung der anwendungsindividuellen Zeitfenster 411-417 ist insbesondere keine zentrale Verwaltung notwendig. Somit bereitet ein Zufügen neuer Applikationen oder ganzer vPLCs keinerlei Probleme, da keine Neuberechnug der Verteilung angestoßen werden muss. Entsprechend einer bevorzugten Ausführungsform überprüft der Host zunächst, ob für die Steuerungsanwendungen, die durch die Ablaufsteuerungskomponenten bereitgestellt werden, überhaupt jeweils ein spezifiziertes anwendungsindividuelles Zeitfenster 411-417 zur Datenübermittlung verfügbar ist. Erst bei bestehender Verfügbarkeit zur Datenübermittlung wird der jeweilige Offset $T_{off}$ der anwendungsindividuellen Zeitfenster 411-417 festgelegt.

**Patentansprüche**

1. Verfahren zur Übermittlung zeitkritischer Daten innerhalb eines Kommunikationsnetzes, bei dem

   - Daten entsprechend einem Zeitmultiplexverfahren innerhalb eines vorgegebenen Zyklus (T) über das Kommunikationsnetz (200) übermittelt werden,
   - die zeitkritischen Daten (400) von und/oder zu Steuerungsanwendungen übermittelt werden, die jeweils mittels zumindest einer Ablaufsteuerungskomponente (131-136) bereitgestellt werden, die in zumindest eine auf einem Host (100) installierte Ablaufsteuerungsumgebung (121-123) ladbar und dort ausführbar ist,
   - zumindest für zeitkritische Daten (400), die ausgewählten Steuerungsanwendungen zugeordnet sind, jeweils ein anwendungsindividuelles Zeitfenster (411-417) spezifiziert wird, dem ein anwendungsindividueller Zyklus zugeordnet ist, der ein $2^n$-Vielfaches des vorgegebenen Zyklus (T) ist,

- jeweils Offsets der anwendungsindividuellen Zeitfenster (411-417) in Abhängigkeit vom jeweiligen anwendungsindividuellen Zyklus derart festgelegt werden, dass eine Folge aneinander angrenzender anwendungsindividueller Zeitfenster (420) gebildet wird,

- zeitkritische Daten (400), die den ausgewählten Steuerungsanwendungen zugeordnet sind, jeweils entsprechend den anwendungsindividuellen Zyklen und den Offsets der anwendungsindividuellen Zeitfenster durch den Host (100) über das Kommunikationsnetz (200) gesendet werden.

2. Verfahren nach Anspruch 1,
bei dem das jeweilige $2^n$-Vielfache des vorgegebenen Zyklus eine Untersetzung des vorgegebenen Zyklus ist und bei dem der jeweilige Offset als Produkt berechnet wird, dessen erster Faktor der vorgegebene Zyklus ist und dessen zweiter Faktor eine Differenz zwischen einer Hälfte der Untersetzung und eins ist.

3. Verfahren nach Anspruch 2,
bei dem sich die Folge der aneinander angrenzenden anwendungsindividuellen Zeitfenster (420) in einem Gesamtzyklus wiederholt, der sich aus einem Produkt des vorgegebenen Zyklus (T) und einer maximalen Untersetzung unter sämtlichen anwendungsindividuellen Zyklen ergibt.

4. Verfahren nach Anspruch 3,
bei dem der jeweilige Offset ein Zeitversatz eines Beginns des jeweiligen anwendungsindividuellen Zeitfensters (411-417) innerhalb des Gesamtzyklus ist.

5. Verfahren nach einem der Ansprüche 1 bis 4,
bei dem der Host (100) überprüft, ob für die ausgewählten Steuerungsanwendungen jeweils ein spezifiziertes anwendungsindividuelles Zeitfenster (411-417) zur Datenübermittlung verfügbar ist, und bei dem der jeweilige Offset der anwendungsindividuellen Zeitfenster bei bestehender Verfügbarkeit zur Datenübermittlung festgelegt wird.

6. Verfahren nach einem der Ansprüche 1 bis 5,
bei dem die Ablaufsteuerungskomponenten (131-136) innerhalb der zumindest einen auf dem Host (100) installierten Ablaufsteuerungsumgebung (121-123) isoliert voneinander ablaufen und gemeinsam einen Betriebssystemkern des Host und/oder einen Netzwerkadapter (101) des Host (100) nutzen.

7. Verfahren nach Anspruch 6,
bei dem die Ablaufsteuerungskomponenten (131-136) Virtuelle Maschinen, Container, WebAssembly- oder Java Bytecode sind und bei dem die Ablaufsteuerungsumgebung (121-123) ein Hypervisor, eine Container-Laufzeitumgebung, eine WebAssembly-Laufzeitumgebung oder eine Java Virtual Machine ist.

8. Verfahren nach einem der Ansprüche 6 oder 7,
bei dem auf dem Host (100) mehrere Ablaufsteuerungsumgebungen (121-123) installiert sind, die gemeinsam einen Netzwerkadapter (101) des Host nutzen.

9. Verfahren nach einem der Ansprüche 1 bis 8,
bei dem für eine Weiterleitung der zeitkritischen Daten (400), die ausgewählten Steuerungsanwendungen zugeordnet sind, durch das Kommunikationsnetz (200) Dienstgüteanforderungen kennzeichnende Dienstgüteparameter spezifiziert werden, und bei dem in Netzinfrastrukturgeräten des Kommunikationsnetzes jeweils bei ausreichender Verfügbarkeit Ressourcen zur Übermittlung der zeitkritischen Daten entsprechend den spezifizierten Dienstgüteparametern reserviert werden, wobei die Verfügbarkeit durch eine übergeordnete Kommunikationssteuerungseinheit des Kommunikationsnetzes und/oder die Netzinfrastrukturgeräte überprüft wird.

10. Verfahren nach Anspruch 9,
bei dem die Netzinfrastrukturgeräte Switches oder Bridges sind und bei dem die Ressourcen zur Übermittlung der zeitkritischen Daten nutzbare Übertragungszeitfenster, Bandbreite, zugesicherte maximale Latenz, Queue-Anzahl, Queue-Cache und/oder Adress-Cache in Switches oder Bridges umfassen.

11. Verfahren nach einem der Ansprüche 9 oder 10,
bei dem eine Weiterleitung der zeitkritischen Daten (400) über die Netzinfrastrukturgeräte mittels Frame Preemption, insbesondere gemäß IEEE 802.1Q, mittels "Time-Aware Shaper", insbesondere gemäß IEEE 802.1Q, mittels Credit-Based Shaper, insbesondere gemäß IEEE 802.1Q, mittels Burst Limiting Shaper, mittels Peristaltic Shaper mittels Priority-Based Shaper, mittels Asynchronous Traffic Shaper und/oder mittels Cyclic Queuing and Forwarding gesteuert wird.

12. Verfahren nach einem der Ansprüche 9 bis 11,
bei dem die zeitkritischen Daten (400) Datenströmen zugeordnet sind und über Pfade, entlang derer in Netzinfrastrukturgeräten Ressourcen zur Übermittlung der Datenströme reserviert sind, übermittelt werden.

**13.** Verfahren nach einem der Ansprüche 1 bis 12, bei dem der vorgegebene Zyklus (T) an sämtlichen Kommunikationsgeräten (100, 301-303), insbesondere Hosts und Netzinfrastrukturgeräten, synchronisiert wird.

**14.** Vorrichtung zur Durchführung eines Verfahrens nach einem der Ansprüche 1 bis 13 mit

- einem Netzwerkadapter (101) zur Übermittlung von Daten über ein Kommunikationsnetz (200) entsprechend einem Zeitmultiplexverfahren innerhalb eines vorgegebenen Zyklus (T),
- einer Ablaufsteuerungsumgebung (121-123) für Ablaufsteuerungskomponenten (131-136) zur Bereitstellung von Steuerungsanwendungen, wobei zumindest eine Ablaufsteuerungskomponente in die Ablaufsteuerungsumgebung ladbar und dort ausführbar ist,
- wobei die Vorrichtung zur Übermittlung zeitkritischer Daten (400) von und/oder zu mittels Ablaufsteuerungskomponenten (131-136) bereitgestellter Steuerungsanwendungen eingerichtet ist,
- wobei die Vorrichtung dazu eingerichtet ist, dass zumindest für zeitkritische Daten (400), die ausgewählten Steuerungsanwendungen zugeordnet sind, jeweils ein anwendungsindividuelles Zeitfenster (411-417) spezifiziert wird, dem ein anwendungsindividueller Zyklus zugeordnet ist, der ein $2^n$-Vielfaches des vorgegebenen Zyklus (T) ist,
- wobei die Vorrichtung ferner dazu eingerichtet ist, jeweils Offsets der anwendungsindividuellen Zeitfenster (411-417) in Abhängigkeit vom jeweiligen anwendungsindividuellen Zyklus derart festzulegen, dass eine Folge aneinander angrenzender anwendungsindividueller Zeitfenster (420) gebildet wird,
- wobei die Vorrichtung ferner dazu eingerichtet ist, zeitkritische Daten (400), die den ausgewählten Steuerungsanwendungen zugeordnet sind, jeweils entsprechend den anwendungsindividuellen Zyklen und den Offsets der anwendungsindividuellen Zeitfenster (411-417) über das Kommunikationsnetz (200) zu senden.

FIG 1

EP 4 625 079 A1

FIG 2

Europäisches
Patentamt

European
Patent Office

Office européen
des brevets

# EUROPÄISCHER RECHERCHENBERICHT

Nummer der Anmeldung

EP 24 16 6821

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 674 824 B1 (SIEMENS AG [DE]) 23. August 2023 (2023-08-23) * Abbildungen 1,2 * * Absätze [0001], [0010] * * Absätze [0012], [0013] * * Absatz [0029] - Absatz [0032] * - - - - - | 1-14 | INV. G05B19/418 H04J3/16 H04L12/40 ADD. H04L12/403 |

RECHERCHIERTE
SACHGEBIETE (IPC)

H04J
G05B
H04L

Der vorliegende Recherchenbericht wurde für alle Patentansprüche erstellt

| Recherchenort | Abschlußdatum der Recherche | Prüfer |
|---|---|---|
| Den Haag | 27. August 2024 | Pieper, Thomas |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes
     Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 16 6821

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2024

| Im Recherchenbericht angeführtes Patentdokument | | Datum der Veröffentlichung | Mitglied(er) der Patentfamilie | | Datum der Veröffentlichung |
|---|---|---|---|---|---|
| EP 3674824 | B1 | 23-08-2023 | CN | 113260934 A | 13-08-2021 |
| | | | EP | 3674824 A1 | 01-07-2020 |
| | | | US | 2022045835 A1 | 10-02-2022 |
| | | | WO | 2020136022 A1 | 02-07-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3038325 B1
- EP 3674824 B1

- US 11917027 B2